(19) Europäisches Patentamt
European Patent Office
Office européen des brevets

(11) **EP 4 246 612 A1**

(12) **EUROPEAN PATENT APPLICATION**

(43) Date of publication:
**20.09.2023 Bulletin 2023/38**

(21) Application number: **23162133.5**

(22) Date of filing: **15.03.2023**

(51) International Patent Classification (IPC):
*H01M 4/131* (2010.01)    *H01M 4/36* (2006.01)
*H01M 4/525* (2010.01)    *H01M 4/62* (2006.01)
*H01M 10/04* (2006.01)    *H01M 10/0562* (2010.01)
*H01M 10/052* (2010.01)    *H01M 50/202* (2021.01)
*H01M 50/264* (2021.01)    *H01M 4/02* (2006.01)

(52) Cooperative Patent Classification (CPC):
**H01M 10/0562; H01M 4/131; H01M 4/366;**
**H01M 4/525; H01M 4/62; H01M 10/0468;**
**H01M 10/0481; H01M 10/052; H01M 50/202;**
**H01M 50/264;** H01M 2004/021; H01M 2300/0068

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **18.03.2022  JP 2022043564**

(71) Applicants:
• **TOYOTA JIDOSHA KABUSHIKI KAISHA**
  **Aichi-Ken 471-8571 (JP)**
• **Panasonic Holdings Corporation**
  **Osaka 571-8501 (JP)**

(72) Inventors:
• **NAGASE, Hiroshi**
  **Toyota-shi, 471-8571 (JP)**
• **ITO, Yusuke**
  **Osaka, 540-6207 (JP)**
• **YABE, Hiroki**
  **Osaka, 540-6207 (JP)**
• **SASAKI, Izuru**
  **Osaka, 540-6207 (JP)**

(74) Representative: **D Young & Co LLP**
  **120 Holborn**
  **London EC1N 2DY (GB)**

(54) **ALL-SOLID-STATE BATTERY**

(57)    An all-solid-state battery (100) comprises a power generation element (50) and a restraint member (70). The restraint member (70) applies a pressure of 0.5 MPa or less to the power generation element (50). The power generation element (50) includes a positive electrode layer (10), a solid electrolyte layer (30), and a negative electrode layer (20). The solid electrolyte layer (30) is interposed between the positive electrode layer (10) and the negative electrode layer (20). The positive electrode layer (10) includes a composite particle (5). The composite particle (5) includes a positive electrode active material particle (1) and a covering layer (2). The covering layer (2) covers at least part of a surface of the positive electrode active material particle (1). The covering layer (2) includes a sulfide solid electrolyte.

FIG.1

**Description**

This nonprovisional application is based on Japanese Patent Application No. 2022-043564 filed on March 18, 2022, with the Japan Patent Office, the entire contents of which are hereby incorporated by reference.

BACKGROUND

Field

The present disclosure relates to an all-solid-state battery.

Description of the Background Art

Japanese Patent Laying-Open No. 2014-154407 discloses a composite particle that includes an active material and a sulfide solid electrolyte.

SUMMARY

In an all-solid-state battery (which may also be simply called "a battery" hereinafter), the interface of contact between solids, more specifically, the interface of contact between an active material and a sulfide solid electrolyte (SSE) needs to be maintained. When a contact failure (such as a micro-level interface debonding) occurs between the active material and the SSE, interface resistance may increase and battery performance may decrease.

A battery includes a power generation element. The power generation element includes an active material and an SSE. For maintaining the interface of contact, a restraint member may be used, for example. The restraint member applies pressure to the power generation element, and thereby the active material and the SSE may be closely adhered. By this, occurrence of contact failure is expected to be reduced.

The pressure applied by the restraint member to the power generation element is also called "restraining pressure".

In this case, however, each member inside the battery is required to have enough strength to withstand the restraining pressure. A member with a high strength tends to have a large volume. Moreover, the higher the restraining pressure is, the larger the volume of the restraint member may be. That is, the higher the restraining pressure is, the lower the energy density of the battery may be.

An object of the present disclosure is to provide an all-solid-state battery that is operable under a low restraining pressure.

Hereinafter, the technical configuration and effects of the present disclosure will be described. It should be noted that the action mechanism according to the present specification includes presumption. The action mechanism does not limit the technical scope of the present disclosure.

1. An all-solid-state battery comprises a power generation element and a restraint member. The restraint member applies a pressure of 0.5 MPa or less to the power generation element. The power generation element includes a positive electrode layer, a solid electrolyte layer, and a negative electrode layer. The solid electrolyte layer is interposed between the positive electrode layer and the negative electrode layer. The positive electrode layer includes a composite particle. The composite particle includes a positive electrode active material particle and a covering layer. The covering layer covers at least part of a surface of the positive electrode active material particle. The covering layer includes a sulfide solid electrolyte.

Conventionally, a restraining pressure of about 20 MPa is applied to a power generation element. In the present disclosure, the restraining pressure is reduced to 0.5 MPa or less. According to a novel finding of the present disclosure, contact failure is likely to occur between the positive electrode active material particle and SSE when the restraining pressure is 0.5 MPa or less. The positive electrode active material particle may shrink during charging. It is considered that, under a low restraining pressure, SSE cannot follow the shrinking behavior of the positive electrode active material particle and thereby may cause a contact failure.

In the present disclosure, the positive electrode active material particle is covered by SSE. With the positive electrode active material particle covered by SSE, it is expected that SSE can follow the shrinking behavior of the positive electrode active material particle even under a restraining pressure of 0.5 MPa or less.

2. In the all-solid-state battery according to "1." above, the positive electrode active material particle may have, for example, a chemical composition represented by the following formula (I):

$$Li_aNi_xMe_{1-x}O_2 \qquad (I)$$

where Me includes at least one selected from the group consisting of Co, Mn, and Al; x satisfies a relationship of $0 < x \leq 1$; and a satisfies a relationship of $0 < a < 1$.

A positive electrode active material particle having the chemical composition of the above formula (I) tends to readily shrink during charging.

3. In the all-solid-state battery according to "2." above, x in the above formula (I) may satisfy a relationship of $0.5 \leq x \leq 1$, for example.

A material that has x (Ni composition ratio) in the above formula (I) being 0.5 or more is also called "a high-nickel material". A high-nickel material tends to shrink to a great extent during charging.

4. In the all-solid-state battery according to "2." or "3." above, when SOC is 90%, for example, a in the above formula (I) may be 0.30 or more.

During charging, Li is dissociated from $Li_aNi_xMe_{1-x}O_2$. That is, the deeper the depth of charge, the smaller the value of a. When a becomes less than 0.30, the shrinkage of $Li_aNi_xMe_{1-x}O_2$ may increase rapidly. When the SOC of the battery is 90%, if a is 0.30 or more, the battery is operable with a mild shrinkage of the positive electrode active material particle.

5. In the all-solid-state battery according to any one of "1." to "4." above, 50 to 95% of the surface of the positive electrode active material particle may be covered by the covering layer, for example.

The ratio of the region covered by the covering layer to the entire surface of the positive electrode active material particle is also called "a covering rate". As the volume of the positive electrode active material particle changes, stress may be produced inside the covering layer. When the covering rate is 50% or more, it is expected that the stress may be dispersed within the covering layer and thereby the occurrence of cracks and the like may be reduced. The covering layer may primarily form an ion conduction path. However, the covering layer may inhibit the formation of an electron conduction path. When the covering rate is 95% or less, the balance between the ion conduction path and the electron conduction path tends to be good.

6. In the all-solid-state battery according to any one of " 1." to "5." above, the power generation element may further include a positive electrode current collector. The positive electrode current collector is bonded to the positive electrode layer. The peel strength between the positive electrode current collector and the positive electrode layer may be 0.05 N/cm or more.

Under a restraining pressure of 0.5 MPa or less, contact resistance between the positive electrode layer and the positive electrode current collector may increase. The increase in the contact resistance between the positive electrode layer and the positive electrode current collector may cause a decrease in battery performance. When the peel strength between the positive electrode current collector and the positive electrode layer is 0.05 N/cm or more, the increase in the contact resistance is expected to be reduced.

In the following, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a schematic cross-sectional view of an all-solid-state battery according to the present embodiment.
Fig. 2 is a conceptual view of a composite particle according to the present embodiment.
Fig. 3 is a graph showing the shrinking behavior of a positive electrode active material particle.
Fig. 4 is a graph showing the relationship between contact resistance and peel strength.
Fig. 5 is a graph showing the influence of restraining pressure and SSE covering at the time of cycle testing.
Fig. 6 is a graph showing the influence of SOC upper limit and SSE covering at the time of cycle testing.
Fig. 7 is a graph showing the influence of the SOC upper limit and of the Ni composition ratio of a positive electrode active material particle at the time of cycle testing.
Fig. 8 is a graph showing the influence of the SOC upper limit, the Ni composition ratio of a positive electrode active material particle, and the SSE covering at the time of cycle testing.

## DESCRIPTION OF THE PREFERRED EMBODIMENTS

<Definitions of Terms, etc.>

Expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.

Expressions such as "may" and "can" are not intended to mean "must" (obligation) but rather mean "there is a possibility" (tolerance).

A singular form also includes its plural meaning, unless otherwise specified. For example, "a particle" may mean not only "one particle" but also "a group of particles (powder, particles)".

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Further, any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm 5\%$, $\pm 3\%$, $\pm 1\%$, and/or the like, for example. Each numerical value may be an approximate value that can vary depending on the implementation configuration of the technique according to the present disclosure. Each numerical value may be expressed in significant figures. Each measured value may be the average value obtained from multiple measurements performed. The number of measurements may be 3 or more, or may be 5 or more, or may be 10 or more. Generally, the greater the number of measurements is, the more reliable the average value is expected to be. Each measured value may be rounded off based on the number of the significant figures. Each measured value may include an error occurring due to an identification limit of the measurement apparatus, for example.

When a compound is represented by a stoichiometric composition formula (such as "$LiCoO_2$", for example), this stoichiometric composition formula is merely a typical example of the compound. The compound may have a non-stoichiometric composition. For example, when lithium cobalt oxide is represented as "$LiCoO_2$", the composition ratio of lithium cobalt oxide is not limited to "Li/Co/O = 1/1/2" but Li, Co, and O may be included in any composition ratio, unless otherwise specified. Further, doping with a trace element and/or substitution may also be tolerated.

Positive electrode active materials may also be abbreviated as follows.

"LCO" stands for "$LiCoO_2$".
"NCA" stands for "$LiNi_{0.8}Co_{0.15}Al_{0.05}O_2$".
"NCM-111" stands for "$LiNi_{1/3}Co_{1/3}Mn_{1/3}O_2$".
"NCM-523" stands for "$LiNi_{0.5}Co_{0.2}Mn_{0.3}O_2$".
"NCM-622" stands for "$LiNi_{0.6}Co_{0.2}Mn_{0.2}O_2$".
"NCM-721" stands for "$LiNi_{0.7}Co_{0.2}Mn_{0.1}O_2$".
"NCM-811" stands for "$LiNi_{0.8}Co_{0.1}Mn_{0.1}O_2$".

Any geometric term (such as "parallel", "vertical", and "perpendicular", for example) should not be interpreted solely in its exact meaning. For example, "parallel" may mean a geometric state that is deviated, to some extent, from exact "parallel". Any geometric term herein may include tolerances and/or errors in terms of design, operation, production, and/or the like. The dimensional relationship in each figure may not necessarily coincide with the actual dimensional relationship. The dimensional relationship (length, width, thickness, and the like) in each figure may have been changed for the purpose of assisting the understanding of the technique according to the present disclosure. Further, a part of a configuration may have been omitted.

"D50" is defined as a particle size in volume-based particle size distribution at which cumulative frequency of particle sizes accumulated from the small size side reaches 50%. D50 may be measured with a laser-diffraction particle size distribution analyzer.

"SOC (state of charge)" refers to the percentage of the charged capacity of the battery at a particular point in time relative to the full charge capacity.

A current hour rate may be denoted by symbol "C". At a current of 1 C, the full charge capacity is discharged in 1 hour. Regarding charge-discharge conditions, "CC (constant current)" refers to a constant-current mode, "CV (constant voltage)" refers to a constant-voltage mode, and "CCCV (constant current-constant voltage)" refers to a constant current-constant voltage mode. Regarding CCCV, "CC current" refers to the current during CC charging (or during CC discharging), and "CV voltage" refers to the voltage during CV charging (or during CV discharging). CV charging or CV discharging ends when the current has attenuated to reach "cutoff current". CC charging or CC discharging ends when the voltage has reached "cutoff voltage".

The "restraining pressure" is determined by the following expression (II).

$$\sigma = E/\varepsilon \qquad (II)$$

$\sigma$ represents restraining pressure.

$\varepsilon$ represents the change in the thickness of the battery (the amount of deformation) before and after a restraint member is attached.

E represents the Young's modulus of the battery.

The "covering rate" is measured by the procedure described below. Twenty cross-sectional SEM (Scanning Electron Microscope) images of composite particles are prepared. For example, twenty cross-sectional SEM images of composite particles may be captured in a cross-sectional SEM image of a positive electrode layer. In each cross-sectional SEM image, the length of the contour of a positive electrode active material particle ($L_0$) is measured. The length of the portion of the contour of the positive electrode active material particle that is covered by SSE ($L_1$) is measured. $L_1$ is divided by $L_0$, and the percentage of the resulting value is the covering rate. The covering rate is measured for each of the twenty composite particles. The arithmetic mean of the twenty covering rates is regarded as "the covering rate".

The "peel strength" is measured by the procedure described below. From a power generation element, a specimen is cut out. The specimen includes a positive electrode current collector and a positive electrode layer. According to "Peel adhesion force test method using back side of tape as test plate" described in "JIS Z 0237: Adhesive tape - adhesive sheet test method", the positive electrode current collector is peeled off from the positive electrode layer. The angle of peeling is 90°. In this way, adhesive force is measured. The adhesive force (N) is divided by the width (cm) of the specimen to calculate the peel strength (N/cm).

<All-Solid-State Battery>

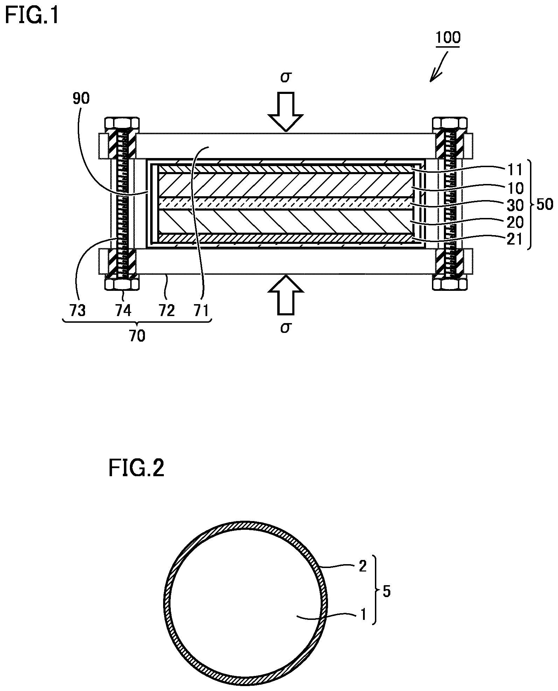

In the present disclosure, "an all-solid-state battery" refers to a battery that comprises a solid electrolyte layer (a layer containing at least a solid electrolyte). Fig. 1 is a schematic cross-sectional view of an all-solid-state battery according to the present embodiment. A battery 100 includes a power generation element 50 and a restraint member 70. Battery 100 may further include an exterior package 90. Exterior package 90 accommodates power generation element 50. For example, exterior package 90 may be a metal case and/or the like, or may be a pouch made of metal foil laminated film and/or the like.

Battery 100 may include only one power generation element 50. Battery 100 may include a plurality of power generation elements 50. For example, the plurality of power generation elements 50 may form a series circuit or may form a parallel circuit. The plurality of power generation elements 50 may be stacked in one direction. Power generation element 50 includes a positive electrode layer 10, a solid electrolyte layer 30, and a negative electrode layer 20.

<<Positive Electrode Layer>>

Positive electrode layer 10 may have a thickness from 10 to 200 $\mu$m, for example. Fig. 2 is a conceptual view of a composite particle according to the present embodiment. Positive electrode layer 10 includes a composite particle 5. Composite particle 5 includes a positive electrode active material particle 1 and a covering layer 2. Composite particle 5 may be formed by particle composing treatment of positive electrode active material particle 1 and SSE. Composite particle 5 may be formed by mechanofusion, for example.

Positive electrode active material particle 1 is the core of composite particle 5. For example, positive electrode active material particle 1 may have a D50 from 1 to 30 $\mu$m, or may have a D50 from 1 to 10 $\mu$m. Positive electrode active material particle 1 may include any component. Positive electrode active material particle 1 may include, for example, at least one selected from the group consisting of $LiCoO_2$, $LiNiO_2$, $LiMnO_2$, $LiMn_2O_4$, $Li(NiCoMn)O_2$, $Li(NiCoAl)O_2$, and $LiFePO_4$. "(NiCoMn)" in "$Li(NiCoMn)O_2$", for example, means that the constituents within the parentheses are collectively regarded as a single unit in the entire composition ratio. As long as (NiCoMn) is collectively regarded as a single unit in the entire composition ratio, the amounts of individual constituents are not particularly limited. For example, $Li(NiCoMn)O_2$ may include $Li(Ni_{1/3}Co_{1/3}Mn_{1/3})O_2$, $Li(Ni_{0.5}Co_{0.2}Mn_{0.3})O_2$, $Li(Ni_{0.8}Co_{0.1}Mn_{0.1})O_2$, and/or the like.

For example, positive electrode active material particle 1 may be represented by the general formula

"$Li_aNi_xMe_{1-x}O_2$ (0<a<1, 0<x≤1, Me = Co, Mn, Al)". This compound tends to readily shrink during charging.

Me includes at least one selected from the group consisting of cobalt (Co), manganese (Mn), and aluminum (Al). For example, Me may consist of Co and Al. That is, Me may not include Mn.

For example, x may satisfy a relationship of 0.2≤x≤1, or may satisfy a relationship of 0.3≤x≤1, or may satisfy a relationship of 0.4≤x≤1, or may satisfy a relationship of 0.5≤x≤1, or may satisfy a relationship of 0.6≤x≤1, or may satisfy a relationship of 0.7≤x≤1, or may satisfy a relationship of 0.8≤x≤1, or may satisfy a relationship of 0.9≤x≤1. A high-nickel material (0.5≤x) tends to shrink to a great extent during charging.

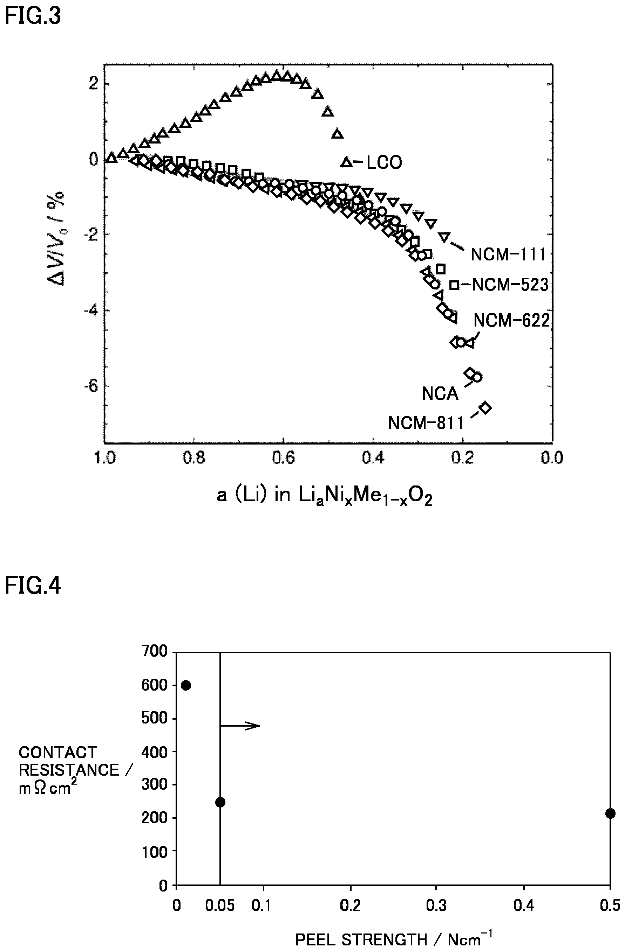

Fig. 3 is a graph showing the shrinking behavior of a positive electrode active material particle. The horizontal axis of the graph represents a, which is the Li composition ratio, of $Li_aNi_xMe_{1-x}O_2$. The vertical axis of the graph represents the rate of volume change ($\Delta V/V_0$) calculated from a crystal lattice constant. When the rate of volume change is negative (-), positive electrode active material particle 1 exhibits shrinking behavior. When the rate of volume change is positive (+), positive electrode active material particle 1 exhibits expanding behavior.

The deeper the depth of charge, the smaller the value of a. It is known that when a is within the range less than 0.30, $Li_aNi_xMe_{1-x}O_2$ shrinks significantly. It is also known that the shrinking behavior of NCM-523 and the like (0.5≤x) is greater than that of NCM-111 (x=1/3). Table 1 below provides examples of the relationship between a and the rate of volume change.

[Table 1]

| "a (Li)" in $Li_aNi_xMe_{1-x}O_2$ | Rate of volume change (absolute value) $|\Delta V/V_0|$ [%] |
|---|---|
| 0.45 | 1.0 |
| 0.37 | 1.5 |
| 0.30 | 2.7 |
| 0.22 | 4.5 |

For example, battery 100 may be designed so that a is 0.30 or more when the SOC of battery 100 is 90%. This makes battery 100 operable with a mild shrinkage of positive electrode active material particle 1 ($\Delta V/V_0$≤2.7%). When battery 100 is operated with a mild shrinkage of positive electrode active material particle 1, resistance increment is expected to be reduced. For example, battery 100 may be designed so that a is 0.22 or more when the SOC of battery 100 is 100%. For example, battery 100 may be designed so that a is 0.37 or more when the SOC of battery 100 is 80%. For example, battery 100 may be designed so that the absolute value of the rate of volume change ($|\Delta V/V_0|$) is from 1 to 2.7% when the SOC of battery 100 is within the range of 10 to 90%.

Positive electrode active material particle 1 may be surface-treated. For example, the surface of positive electrode active material particle 1 may be covered by a buffer layer. For example, the buffer layer may have a thickness from 5 to 50 nm. For example, the buffer layer may include LiNbOs and/or the like.

(Covering layer)

Covering layer 2 is the shell for composite particle 5. For example, covering layer 2 may have a thickness from 0.5 to 5 μm, or may have a thickness from 1 to 3 μm. Covering layer 2 covers at least part of the surface of positive electrode active material particle 1. For example, the covering rate may be from 30 to 100%. For example, the covering rate may be from 50 to 95%. When the covering rate is 50% or more, it is expected that the stress may be dispersed within covering layer 2 and thereby the occurrence of cracks and the like may be reduced. When the covering rate is 95% or less, the balance between ion conduction paths and electron conduction paths tends to be good.

Covering layer 2 includes SSE. SSE may be particles. For example, SSE may have a D50 from 0.5 to 5 μm, or may have a D50 from 1 to 3 μm. SSE is a Li-ion conductor. SSE includes lithium (Li) and sulfur (S). For example, SSE may further include phosphorus (P), oxygen (O), silicon (Si), and/or the like. For example, SSE may further include a halogen and/or the like. For example, SSE may further include iodine (I), bromine (Br), and/or the like. For example, SSE may be glass ceramic, or may be argyrodite.

For example, SSE may include at least one selected from the group consisting of $LiI-LiBr-Li_3PS_4$, $Li_2S-SiS_2$, $LiI-Li_2S-SiS_2$, $LiI-Li_2S-P_2S_5$, $LiI-Li_2O-Li_2S-P_2S_5$, $LiI-Li_2S-P_2O_5$, $LiI-Li_3PO_4-P_2S_5$, $Li_2S-P_2S_5$, and $Li_3PS_4$. For example, "$LiI-LiBr-Li_3PS_4$" refers to an SSE that is produced by mixing LiI, LiBr, and $Li_3PS_4$ at any molar ratio. For example, SSE may be produced by a mechanochemical method. "$Li_2S-P_2S_5$" includes $Li_3PS_4$. $Li_3PS_4$ may be produced by mixing $Li_2S$ and $P_2S_5$ at "$Li_2S/P_2S_5$ = 75/25 (molar ratio)".

(Other Components)

In addition to SSE included in composite particle 5, positive electrode layer 10 may further include another SSE (also called "an additional SSE"). The additional SSE may form an ion conduction path inside positive electrode layer 10. The amount of the additional SSE to be used may be, for example, from 1 to 200 parts by volume relative to 100 parts by volume of composite particle 5. The additional SSE may be of the same type as or may be of a different type from the SSE included in the composite particle.

Positive electrode layer 10 may further include a conductive material, for example. The conductive material may form an electron conduction path inside positive electrode layer 10. The amount of the conductive material to be used may be, for example, from 0.1 to 10 parts by mass relative to 100 parts by mass of composite particle 5. The conductive material may include any component. The conductive material may include, for example, at least one selected from the group consisting of carbon black, vapor grown carbon fiber (VGCF), carbon nanotube (CNT), and graphene flake.

Positive electrode layer 10 may further include a binder, for example. The amount of the binder to be used may be, for example, from 0.1 to 10 parts by mass relative to 100 parts by mass of composite particle 5. The binder may include any component. The binder may include, for example, at least one selected from the group consisting of polyvinylidene difluoride (PVdF), vinylidene difluoride-hexafluoropropylene copolymer (PVDF-HFP), styrene-butadiene rubber (SBR), and polytetrafluoroethylene (PTFE).

<<Positive Electrode Current Collector>>

Power generation element 50 may further include a positive electrode current collector 11. Positive electrode current collector 11 is bonded to positive electrode layer 10. Positive electrode current collector 11 may include Al foil, Al alloy foil, and/or the like, for example. Positive electrode current collector 11 may be covered by a carbon material. The carbon material may include carbon black and/or the like, for example. Positive electrode current collector 11 may have a thickness from 5 to 50 $\mu$m, for example.

For example, positive electrode current collector 11 may be bonded to positive electrode layer 10 with an adhesive. For example, a hot-melt adhesive and/or the like may be used. The hot-melt adhesive may include an ethylene vinyl acetate copolymer and/or the like, for example. Positive electrode current collector 11 may be bonded to positive electrode layer 10 by hot pressing. The pressing temperature may be from 130 to 170°C, for example. The pressing temperature may be 150°C, for example. The pressing pressure may be from 0.5 to 5 MPa, for example. The pressing pressure may be 1 MPa, for example.

Fig. 4 is a graph showing the relationship between contact resistance and peel strength. Under a restraining pressure of 0.5 MPa or less, contact resistance between positive electrode current collector 11 and positive electrode layer 10 tends to increase. When the peel strength between positive electrode current collector 11 and positive electrode layer 10 is high, the increase of contact resistance is expected to be reduced. For example, the peel strength may be 0.05 N/cm or more. When the peel strength is 0.05 N/cm or more, contact resistance tends to be stable. For example, the peel strength may be 0.5 N/cm or more. For example, the peel strength may be from 0.05 to 0.5 N/cm or more.

<<Negative Electrode Layer>>

Negative electrode layer 20 may have a thickness from 10 to 200 $\mu$m, for example. Negative electrode layer 20 includes negative electrode active material particles and SSE. Negative electrode layer 20 may further include a conductive material, a binder, and/or the like, for example. Negative electrode layer 20 and positive electrode layer 10 may include the same type of, or different types of, SSE. The negative electrode active material particles may include any component. The negative electrode active material particles may include, for example, at least one selected from the group consisting of graphite, Si, silicon oxide [$SiO_x$ ($0<x<2$)], and $Li_4Ti_5O_{12}$. The conductive material may include any component. The conductive material may include VGCF and/or the like, for example. The binder may include any component. The binder may include SBR and/or the like, for example.

<<Negative Electrode Current Collector>>

Power generation element 50 may further include a negative electrode current collector 21. Negative electrode current collector 21 is bonded to negative electrode layer 20. Negative electrode current collector 21 may include copper (Cu) foil, Ni foil, and/or the like, for example. Negative electrode current collector 21 may have a thickness from 5 to 50 $\mu$m, for example.

«Solid Electrolyte Layer»

Solid electrolyte layer 30 may have a thickness from 1 to 30 $\mu$m, for example. Solid electrolyte layer 30 is interposed between positive electrode layer 10 and negative electrode layer 20. Solid electrolyte layer 30 separates positive electrode layer 10 from negative electrode layer 20. Solid electrolyte layer 30 is also called "a separator layer". Solid electrolyte layer 30 includes SSE. Solid electrolyte layer 30 may further include a binder. The binder may include any component. The binder may include PVdF, PVdF-HFP, SBR, and/or the like, for example. Solid electrolyte layer 30 and positive electrode layer 10 may include the same type of, or different types of, SSE. Solid electrolyte layer 30 and negative electrode layer 20 may include the same type of, or different types of, SSE.

<<Restraint Member>>

Restraint member 70 applies pressure (restraining pressure) to power generation element 50. The restraining pressure is applied in a thickness direction of power generation element 50. The thickness direction of power generation element 50 is parallel to the direction of stacking of positive electrode layer 10, solid electrolyte layer 30, and negative electrode layer 20. Restraint member 70 may be positioned outside exterior package 90. Restraint member 70 may apply pressure to power generation element 50 via exterior package 90.
The restraining pressure is 0.5 MPa or less. When the restraining pressure is 0.5 MPa or less, it is expected that reduced size, reduced weight, increased energy density, and the like of battery 100 may be achieved. The restraining pressure may be 0.1 MPa or less, for example. The restraining pressure is higher than zero. For example, the restraining pressure may be 0.01 MPa or more, or may be 0.1 MPa or more. For example, the restraining pressure may be from 0.1 to 0.5 MPa, or may be from 0.01 to 0.1 MPa.
Restraint member 70 may have any structure as long as it can apply pressure to power generation element 50. For example, restraint member 70 may be composed of a single member, or may be composed of a plurality of members. For example, restraint member 70 may include a first plate 71, a second plate 72, a bolt 73, and a nut 74. Power generation element 50 and exterior package 90 are interposed between first plate 71 and second plate 72. A through hole is provided to each of first plate 71 and second plate 72. For example, a through hole may be provided to each of the four corners of each plate in the plan view. Into the through hole, bolt 73 is inserted. Nut 74 is threadedly engaged with bolt 73. Nut 74 is tightened, and thereby first plate 71 and second plate 72 apply pressure to power generation element 50. That is, restraining pressure ($\sigma$) is produced. The restraining pressure may be adjusted by, for example, changing the tightening torque of nut 74. For example, restraint member 70 may be made of metal, or may be made of resin. For example, restraint member 70 may be made of stainless steel (SUS).

[Examples]

< Producing Test Battery>

«Preparing Positive Electrode»

A positive electrode active material particle was prepared. The positive electrode active material particle and LiNbO$_3$ were mixed in a tumbling fluidized granulation coating apparatus, and thereby the positive electrode active material particle was surface-treated.
The below materials were prepared.

SSE: LiI-LiBr-Li$_2$S-P$_2$S$_5$ (glass ceramic type, with a D50 of 2.5 $\mu$m)
Conductive material: VGCF
Binder: SBR
Dispersion medium: tetralin
Positive electrode current collector: Al foil (thickness, 15 $\mu$m)

90 parts by volume of the positive electrode active material particle and 10 parts by volume of SSE were mixed in a dry particle composing machine (trade name "NOB-MINI", manufactured by Hosokawa Micron Corporation) to prepare composite particles. Mixing conditions were as follows.

Temperature of mixture during mixing: 50°C
Blade-to-wall gap: 1 mm
Number of revolutions: 3000 rpm
Duration of treatment: 1 minute

4 parts by mass of the composite particle, 0.094 parts by mass of the conductive material, 1.024 parts by mass of SSE, 0.017 parts by mass of the binder, and 2.77 parts by mass of the dispersion medium were mixed with the use of an ultrasonic homogenizer (trade name "UH-50", manufactured by SMT) to prepare a positive electrode paste.

A blade applicator was used to apply the positive electrode paste to the surface of the positive electrode current collector. After the application, the positive electrode paste was dried for 30 minutes on a hot plate (the temperature was set at 100°C) to form a positive electrode layer. In this manner, a positive electrode was prepared.

<<Preparing Negative Electrode>>

The below materials were prepared.

Negative electrode active material particles: $Li_4Ti_5O_{12}$
SSE: LiI-LiBr-$Li_2$S-$P_2$S$_5$ (glass ceramic type, with a D50 of 2.5 $\mu$m)
Conductive material: VGCF
Binder: SBR
Dispersion medium: tetralin
Negative electrode current collector: Cu foil (thickness, 22 $\mu$m)

3 parts by mass of the negative electrode active material particles, 0.033 parts by mass of the conductive material, 0.039 parts by mass of the binder, and 3.71 parts by mass of the dispersion medium were mixed for 30 minutes with the use of an ultrasonic homogenizer (trade name "UH-50", manufactured by SMT). After the 30-minute mixing, 1 part by mass of SSE was added. After the addition of SSE, the mixture was mixed for another 30 minutes to prepare a negative electrode paste.

A blade applicator was used to apply the negative electrode paste to the surface of the negative electrode current collector. After the application, the negative electrode paste was dried for 30 minutes on a hot plate (the temperature was set at 100°C) to form a negative electrode layer. The weight per unit area of the negative electrode layer was adjusted so that the ratio of the charged specific capacity of the negative electrode to the charged specific capacity of the positive electrode was 1.15. The charged specific capacity of the positive electrode was 185 mAh/g. In this manner, a negative electrode was prepared.

<<Preparing Solid Electrolyte Layer>>

The below materials were prepared.

SSE: LiI-LiBr-$Li_2$S-$P_2$S$_5$ (glass ceramic type, with a D50 of 2.5 $\mu$m)
Binder: SBR solution (with a mass concentration of 5%, in heptane as solvent)
Dispersion medium: heptane

SSE, the binder, and the dispersion medium were mixed in a polypropylene vial for 30 seconds by means of an ultrasonic homogenizer (trade name "UH-50", manufactured by SMT). After mixing, the vial was set in a shaker. The vial was shaken in the shaker for 3 minutes to prepare a solid electrolyte paste.

«Assembly»

The positive electrode was pressed. After the pressing, a die coater was used to apply the solid electrolyte paste to the surface of the positive electrode layer. After the application, the solid electrolyte paste was dried for 30 minutes on a hot plate (the temperature was set at 100°C) to form a solid electrolyte layer. In this manner, a first unit was prepared. With the use of a roll press, the first unit was pressed. The pressing pressure was 2 ton/cm$^2$.

The negative electrode was pressed. After the pressing, a die coater was used to apply the solid electrolyte paste to the surface of the negative electrode layer. After the application, the solid electrolyte paste was dried for 30 minutes on a hot plate (the temperature was set at 100°C) to form a solid electrolyte layer. In this manner, a second unit was prepared. With the use of a roll press, the second unit was pressed. The pressing pressure was 2 ton/cm$^2$.

To the surface of a metal foil, the solid electrolyte paste was applied. After the application, the solid electrolyte paste was dried for 30 minutes on a hot plate (the temperature was set at 100°C) to form a solid electrolyte layer.

The solid electrolyte layer supported by the metal foil was transferred to the surface of the first unit (the surface of the solid electrolyte layer). By die-cutting, the planar shapes of the first unit and the second unit were adjusted. The first unit and the second unit were stacked so that the solid electrolyte layer of the first unit faced the solid electrolyte layer of the second unit. In this manner, a power generation element was formed. The power generation element was subjected to hot pressing. The pressing temperature was 160°C. The pressing pressure was 2 ton/cm$^2$.

An exterior package (a pouch made of Al-laminated film) was prepared. The power generation element was sealed into the exterior package. A restraint member was prepared. The restraint member was attached to the outer side of the exterior package in such a manner that restraining pressure could be produced. In this manner, a test battery was produced.

By the above procedure, test batteries Nos. 1 to 5 were produced. The structural differences between these test batteries are listed in Table 2 below.

[Table 2]

| No. | Positive electrode active material particle | | SSE Covering (composing treatment) | Restraining pressure [MPa] |
| --- | --- | --- | --- | --- |
| | Composition | D50 [μm] | | |
| 1 | $LiNi_{0.8}Co_{0.15}Al_{0.05}O_2$ (NCA) | 5 | Yes | 0.5 |
| 2 | $LiNi_{0.8}Co_{0.15}Al_{0.05}O_2$ (NCA) | 5 | Yes | 0.1 |
| 3 | $LiNi_{0.8}Co_{0.15}Al_{0.05}O_2$ (NCA) | 5 | No | 0.5 |
| 4 | $LiNi_{0.8}Co_{0.15}Al_{0.05}O_2$ (NCA) | 5 | No | 20 |
| 5 | $LiNi_{1/3}Co_{1/3}Mn_{1/3}O_2$ (NCM-111) | 4.5 | No | 0.5 |

<Evaluation>

By the below procedure, test batteries Nos. 1 to 5 were evaluated.

«Initial Resistance»

The sequence of the following CCCV charging and CCCV discharging was repeated twice.
CCCV charging: CC current = 0.33 C, CV voltage = 2.7 V, cutoff current = 0.01 C
CCCV discharging: CC current = 0.33 C, CV voltage = 1.5 V, cutoff current = 0.01 C
By the following CCCV charging, the state of charge of the test battery was adjusted.
CCCV charging: CC current = 0.33 C, CV voltage = 2.0 V, cutoff current = 0.01 C
After the state of charge was adjusted, a test battery was discharged at a current of 8.0 mA/cm$^2$ for ten seconds. The voltage change was divided by the discharge current to determine initial resistance.

«Cycle Test, Resistance Increment»

Under the below-specified first cycling conditions or second cycling conditions, a charge-discharge cycle (a single sequence of CC charging and CC discharging) was repeated 150 times. After the charge-discharge cycles, post-endurance resistance was measured under the same conditions as the initial resistance measurement conditions. The post-endurance resistance was divided by the initial resistance to determine resistance increment (in percentage). It is expected that resistance increment increases when contact failure occurs between the positive electrode active material particle and SSE during cycle testing.

First cycling conditions

Ambient temperature: 60°C
CC charging: current = 5 C, cutoff voltage = 2.5 V (SOC upper limit, 80%)
CC discharging: current = 1 C, cutoff voltage = 1.5 V
Second cycling conditions
Ambient temperature: 60°C
CC charging: current = 5 C, cutoff voltage = 2.6 V (SOC upper limit, 90%)
CC discharging: current = 1 C, cutoff voltage = 1.5 V

<Results>

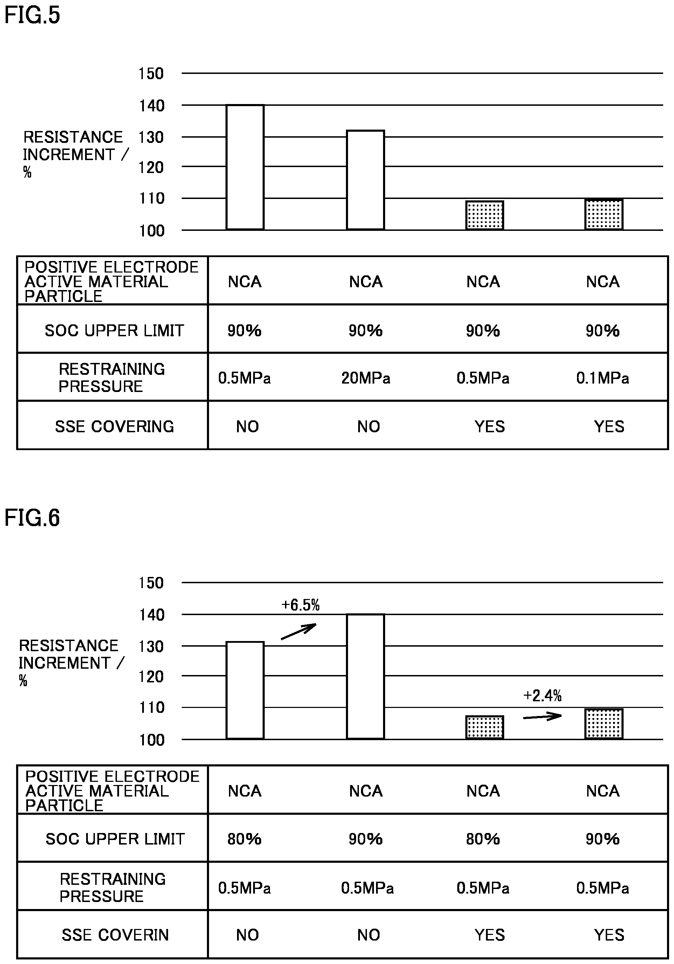

Fig. 5 is a graph showing the influence of restraining pressure and SSE covering at the time of cycle testing. Without SSE covering, resistance increment tends to be high at a low restraining pressure (0.5 MPa). Without SSE covering, resistance increment slightly improves at a high restraining pressure (20 MPa).

With SSE covering, resistance increment tends to be low even at a low restraining pressure (0.5 MPa). Further, even at a low restraining pressure (0.1 MPa), resistance increment increases only slightly.

Fig. 6 is a graph showing the influence of SOC upper limit and SSE covering at the time of cycle testing. Without SSE covering, resistance increment increases by 6.5% as the SOC upper limit increases from 80% to 90%.

With SSE covering, even as the SOC upper limit increases from 80% to 90%, resistance increment increases only by 2.4%.

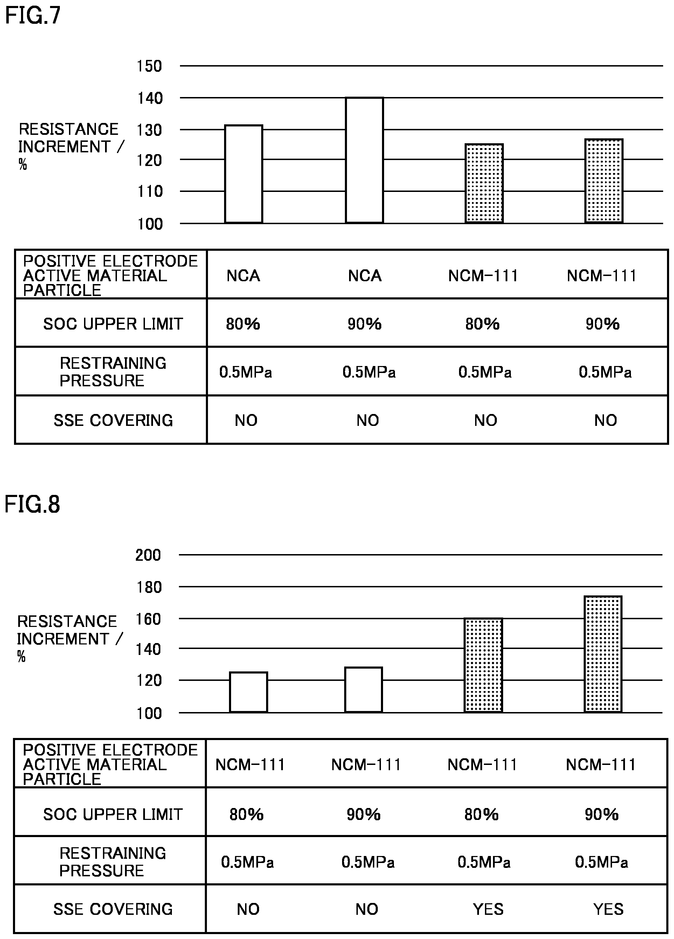

Fig. 7 is a graph showing the influence of the SOC upper limit and of the Ni composition ratio of a positive electrode active material particle at the time of cycle testing. When the Ni composition ratio is 0.5 or more (NCA), resistance increment tends to increase as the SOC upper limit increases from 80% to 90%.

When the Ni composition ratio is less than 0.5 (NCM-111), even as the SOC upper limit increases from 80% to 90%, resistance increment increases only slightly.

From the results shown in Fig. 7, in the case where the Ni composition ratio is 0.5 or more (namely, in the case of a high-nickel material), it seems that, when SOC increases, positive electrode active material particles shrink significantly and thereby contact failure tends to occur.

Fig. 8 is a graph showing the influence of the SOC upper limit, the Ni composition ratio of a positive electrode active material particle, and the SSE covering at the time of cycle testing. In the case of NCM-111, without SSE covering, even when the SOC upper limit increases from 80% to 90%, resistance increment increases only slightly.

In the case of NCM-111, with SSE covering, resistance increment increases. The electronic conductivity of NCM-111 tends to be about three orders of magnitude lower than NCA. SSE covering to the low-electronically-conductive NCM-111 may have led to an even lower electronic conductivity, increasing the resistance increment.

The present embodiment and the present example are illustrative in any respect. The present embodiment and the present example are non-restrictive. The technical scope of the present disclosure encompasses any modifications within the meaning and the scope equivalent to the terms of the claims. For example, it is expected that certain configurations of the present embodiments and the present examples can be optionally combined.

## Claims

1. An all-solid-state battery comprising:

   a power generation element (50); and
   a restraint member (70), wherein
   the restraint member (70) applies a pressure of 0.5 MPa or less to the power generation element (50),
   the power generation element (50) includes a positive electrode layer (10), a solid electrolyte layer (30), and a negative electrode layer (20),
   the solid electrolyte layer (30) is interposed between the positive electrode layer (10) and the negative electrode layer (20),
   the positive electrode layer (10) includes a composite particle (5),
   the composite particle (5) includes a positive electrode active material particle (1) and a covering layer (2),
   the covering layer (2) covers at least part of a surface of the positive electrode active material particle (1), and
   the covering layer (2) includes a sulfide solid electrolyte.

2. The all-solid-state battery according to claim 1, wherein the positive electrode active material particle (1) has a chemical composition represented by the following formula (I):

$$Li_aNi_xMe_{1-x}O_2 \qquad (I)$$

   where

   Me includes at least one selected from the group consisting of Co, Mn, and Al,
   x satisfies a relationship of $0<x<1$, and
   a satisfies a relationship of $0<a<1$.

3. The all-solid-state battery according to claim 2, wherein x in the above formula (I) satisfies a relationship of $0.5 \leq x \leq 1$.

4. The all-solid-state battery according to claim 2 or 3, wherein, when SOC is 90%, a in the above formula (I) is 0.30 or more.

5. The all-solid-state battery according to any one of claims 1 to 4, wherein 50 to 95% of the surface of the positive electrode active material particle (1) is covered by the covering layer (2).

6. The all-solid-state battery according to any one of claims 1 to 5, wherein

the power generation element (50) further includes a positive electrode current collector (11),
the positive electrode current collector (11) is bonded to the positive electrode layer (10), and
a peel strength between the positive electrode current collector (11) and the positive electrode layer (10) is 0.05 N/cm or more.

FIG.1

FIG.2

FIG.3

FIG.4

## FIG.5

| | | | |
|---|---|---|---|
| RESISTANCE INCREMENT / % | (bar chart, y-axis 100–150) | | |

| POSITIVE ELECTRODE ACTIVE MATERIAL PARTICLE | NCA | NCA | NCA | NCA |
|---|---|---|---|---|
| SOC UPPER LIMIT | 90% | 90% | 90% | 90% |
| RESTRAINING PRESSURE | 0.5MPa | 20MPa | 0.5MPa | 0.1MPa |
| SSE COVERING | NO | NO | YES | YES |

## FIG.6

| | | | |
|---|---|---|---|
| RESISTANCE INCREMENT / % | (bar chart, y-axis 100–150) +6.5% +2.4% | | |

| POSITIVE ELECTRODE ACTIVE MATERIAL PARTICLE | NCA | NCA | NCA | NCA |
|---|---|---|---|---|
| SOC UPPER LIMIT | 80% | 90% | 80% | 90% |
| RESTRAINING PRESSURE | 0.5MPa | 0.5MPa | 0.5MPa | 0.5MPa |
| SSE COVERIN | NO | NO | YES | YES |

## FIG.7

| POSITIVE ELECTRODE ACTIVE MATERIAL PARTICLE | NCA | NCA | NCM-111 | NCM-111 |
|---|---|---|---|---|
| SOC UPPER LIMIT | 80% | 90% | 80% | 90% |
| RESTRAINING PRESSURE | 0.5MPa | 0.5MPa | 0.5MPa | 0.5MPa |
| SSE COVERING | NO | NO | NO | NO |

## FIG.8

| POSITIVE ELECTRODE ACTIVE MATERIAL PARTICLE | NCM-111 | NCM-111 | NCM-111 | NCM-111 |
|---|---|---|---|---|
| SOC UPPER LIMIT | 80% | 90% | 80% | 90% |
| RESTRAINING PRESSURE | 0.5MPa | 0.5MPa | 0.5MPa | 0.5MPa |
| SSE COVERING | NO | NO | YES | YES |

Europäisches
Patentamt
European
Patent Office
Office européen
des brevets

**EUROPEAN SEARCH REPORT**

Application Number

EP 23 16 2133

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/305562 A1 (KAMAYA NORIAKI [JP] ET AL) 30 September 2021 (2021-09-30) | 1-6 | INV.<br>H01M4/131 |
| Y | * paragraphs [0006], [0009], [0014], [0056], [0084], [0116]; table 1 * | 6 | H01M4/36<br>H01M4/525<br>H01M4/62 |
| Y | JP 2020 129485 A (TOYOTA MOTOR CORP) 27 August 2020 (2020-08-27) <br>* paragraph [0023] * | 6 | H01M10/04<br>H01M10/0562<br>H01M10/052<br>H01M50/202 |
| A | US 2022/037659 A1 (NISHIMURA HIDEAKI [JP] ET AL) 3 February 2022 (2022-02-03) <br>* the whole document * | 1-6 | H01M50/264<br><br>ADD.<br>H01M4/02 |

TECHNICAL FIELDS
SEARCHED (IPC)

H01M

The present search report has been drawn up for all claims

| Place of search | Date of completion of the search | Examiner |
|---|---|---|
| Munich | 26 July 2023 | De Porcellinis, D |

## ANNEX TO THE EUROPEAN SEARCH REPORT
## ON EUROPEAN PATENT APPLICATION NO.

EP 23 16 2133

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2023

| Patent document cited in search report | | Publication date | Patent family member(s) | | Publication date |
|---|---|---|---|---|---|
| US 2021305562 | A1 | 30-09-2021 | CN | 113471434 A | 01-10-2021 |
| | | | DE | 102021107837 A1 | 30-09-2021 |
| | | | JP | 2021163580 A | 11-10-2021 |
| | | | US | 2021305562 A1 | 30-09-2021 |
| JP 2020129485 | A | 27-08-2020 | JP | 7243249 B2 | 22-03-2023 |
| | | | JP | 2020129485 A | 27-08-2020 |
| US 2022037659 | A1 | 03-02-2022 | CN | 114068913 A | 18-02-2022 |
| | | | JP | 7256150 B2 | 11-04-2023 |
| | | | JP | 2022025903 A | 10-02-2022 |
| | | | US | 2022037659 A1 | 03-02-2022 |

EPO FORM P0459

For more details about this annex : see Official Journal of the European Patent Office, No. 12/82

**EP 4 246 612 A1**

## REFERENCES CITED IN THE DESCRIPTION

**Patent documents cited in the description**

- JP 2022043564 A
- JP 2014154407 A